# EUROPEAN PATENT APPLICATION

(11) **EP 4 654 109 A1**
(43) Date of publication of application: **26.11.2025**
(21) Application number: 23917316.4
(22) Date of filing: 22.12.2023
(51) Int. Cl.: G06Q 20/22, G06Q 20/40

(54) **PAYMENT METHODS AND APPARATUSES BASED ON USER IDENTITY**

(30) Priority: 19.01.2023 CN 202310096826
(71) Applicant: Alipay (Hangzhou) Information Technology Co., Ltd., Hangzhou, Zhejiang 310000 (CN)
(72) Inventor: KE, Liuyang, Hangzhou, Zhejiang 310000 (CN); WANG, Nan, Hangzhou, Zhejiang 310000 (CN); XU, Shuyi, Hangzhou, Zhejiang 310000 (CN); ZHENG, Jie, Hangzhou, Zhejiang 310000 (CN); HE, Wei, Hangzhou, Zhejiang 310000 (CN); XU, Gang, Hangzhou, Zhejiang 310000 (CN); XIE, Shengcheng, Hangzhou, Zhejiang 310000 (CN); SHI, Ping, Hangzhou, Zhejiang 310000 (CN); HU, Ronghai, Hangzhou, Zhejiang 310000 (CN); WANG, Weijun, Hangzhou, Zhejiang 310000 (CN)
(74) Representative: Winter, Brandl - Partnerschaft mbB
(86) International application number: PCT/CN2023/141095
(87) International publication number: WO 2024/152850

(57) **Abstract**

Embodiments of this specification provide a user identity-based payment method and apparatus. The user identity-based payment method includes: obtaining a payment request of a payment user that is sent by a merchant system, where the payment request carries an identity type corresponding to a payment channel for submitting the payment request; detecting whether the payment user performs identity verification authorization for the identity type; if yes, verifying whether user identity information obtained based on the identity verification authorization matches the identity type; and if the user identity information matches the identity type, determining a payment policy corresponding to the identity type in a merchant subscription configuration, and performing payment processing for the payment request based on the payment policy.

## Description

### TECHNICAL FIELD

This specification relates to the field of data processing technologies, and in particular, to a user identity-based payment method and apparatus.

### BACKGROUND

With the development and popularization of e-commerce, users increasingly frequently use online payment methods, and network payment systems are increasingly widely applied, bringing great convenience to users' daily lives. In addition, with the improvement of users' living standards, online payment channels are constantly expanding, and different users have more diversified requirements for the online payment methods. This poses higher challenges to online payment providers.

### SUMMARY

One or more embodiments of this specification provide a user identity-based payment method, including: obtaining a payment request of a payment user that is sent by a merchant system, where the payment request carries an identity type corresponding to a payment channel for submitting the payment request; detecting whether the payment user performs identity verification authorization for the identity type; if yes, verifying whether user identity information obtained based on the identity verification authorization matches the identity type; and if the user identity information matches the identity type, determining a payment policy corresponding to the identity type in a merchant subscription configuration, and performing payment processing for the payment request based on the payment policy.

One or more embodiments of this specification provide another user identity-based payment method, including: submitting, to a merchant system based on a payment channel selected by a user by using a merchant application, a payment request that carries an identity type corresponding to the payment channel; receiving a verification authorization page for the identity type that is returned by a payment platform, and submitting an authorization instruction to the payment platform to perform identity verification authorization; and obtaining and displaying a payment result of payment processing performed by the payment platform for the payment request, where the payment processing is performed based on a payment policy corresponding to the identity type in a merchant subscription configuration when user identity information obtained based on the identity verification authorization matches the identity type.

One or more embodiments of this specification provide a user identity-based payment apparatus, including: a payment request obtaining module, configured to obtain a payment request of a payment user that is sent by a merchant system, where the payment request carries an identity type corresponding to a payment channel for submitting the payment request; and an authorization detection module, configured to detect whether the payment user performs identity verification authorization for the identity type, where if yes, an identity type verification module is run, and the identity type verification module is configured to verify whether user identity information obtained based on the identity verification authorization matches the identity type; and if the user identity information matches the identity type, a payment processing module is run, and the payment processing module is configured to: determine a payment policy corresponding to the identity type in a merchant subscription configuration, and perform payment processing for the payment request based on the payment policy.

One or more embodiments of this specification provide another user identity-based payment apparatus, including: a payment request submission module, configured to submit, to a merchant system based on a payment channel selected by a user by using a merchant application, a payment request that carries an identity type corresponding to the payment channel; an authorization page receiving module, configured to: receive a verification authorization page for the identity type that is returned by a payment platform, and submit an authorization instruction to the payment platform to perform identity verification authorization; and a payment result obtaining module, configured to obtain and display a payment result of payment processing performed by the payment platform for the payment request, where the payment processing is performed based on a payment policy corresponding to the identity type in a merchant subscription configuration when user identity information obtained based on the identity verification authorization matches the identity type.

One or more embodiments of this specification provide a user identity-based payment device, including: a processor; and a storage, configured to store computer-executable instructions. When the computer-executable instructions are executed, the processor is enabled to perform the following operations: obtaining a payment request of a payment user that is sent by a merchant system, where the payment request carries an identity type corresponding to a payment channel for submitting the payment request; detecting whether the payment user performs identity verification authorization for the identity type; if yes, verifying whether user identity information obtained based on the identity verification authorization matches the identity type; and if the user identity information matches the identity type, determining a payment policy corresponding to the identity type in a merchant subscription configuration, and performing payment processing for the payment request based on the payment policy.

One or more embodiments of this specification provide another user identity-based payment device, including: a processor; and a storage, configured to store computer-executable instructions. When the computer-executable instructions are executed, the processor is enabled to perform the following operations: submitting, to a merchant system based on a payment channel selected by a user by using a merchant application, a payment request that carries an identity type corresponding to the payment channel; receiving a verification authorization page for the identity type that is returned by a payment platform, and submitting an authorization instruction to the payment platform to perform identity verification authorization; and obtaining and displaying a payment result of payment processing performed by the payment platform for the payment request, where the payment processing is performed based on a payment policy corresponding to the identity type in a merchant subscription configuration when user identity information obtained based on the identity verification authorization matches the identity type.

One or more embodiments of this specification provide a storage medium, configured to store computer-executable instructions. When the computer-executable instructions are executed by a processor, the following procedure is implemented: obtaining a payment request of a payment user that is sent by a merchant system, where the payment request carries an identity type corresponding to a payment channel for submitting the payment request; detecting whether the payment user performs identity verification authorization for the identity type; if yes, verifying whether user identity information obtained based on the identity verification authorization matches the identity type; and if the user identity information matches the identity type, determining a payment policy corresponding to the identity type in a merchant subscription configuration, and performing payment processing for the payment request based on the payment policy.

One or more embodiments of this specification provide another storage medium, configured to store computer-executable instructions. When the computer-executable instructions are executed by a processor, the following procedure is implemented: submitting, to a merchant system based on a payment channel selected by a user by using a merchant application, a payment request that carries an identity type corresponding to the payment channel; receiving a verification authorization page for the identity type that is returned by a payment platform, and submitting an authorization instruction to the payment platform to perform identity verification authorization; and obtaining and displaying a payment result of payment processing performed by the payment platform for the payment request, where the payment processing is performed based on a payment policy corresponding to the identity type in a merchant subscription configuration when user identity information obtained based on the identity verification authorization matches the identity type.

### BRIEF DESCRIPTION OF DRAWINGS

To describe the technical solutions in one or more embodiments of this specification or in the related technology more clearly, the following briefly describes the accompanying drawings needed for describing the embodiments or the related technology. Clearly, the accompanying drawings in the following descriptions merely show some embodiments of this specification, and a person of ordinary skill in the art can still derive other drawings from these accompanying drawings without creative efforts.

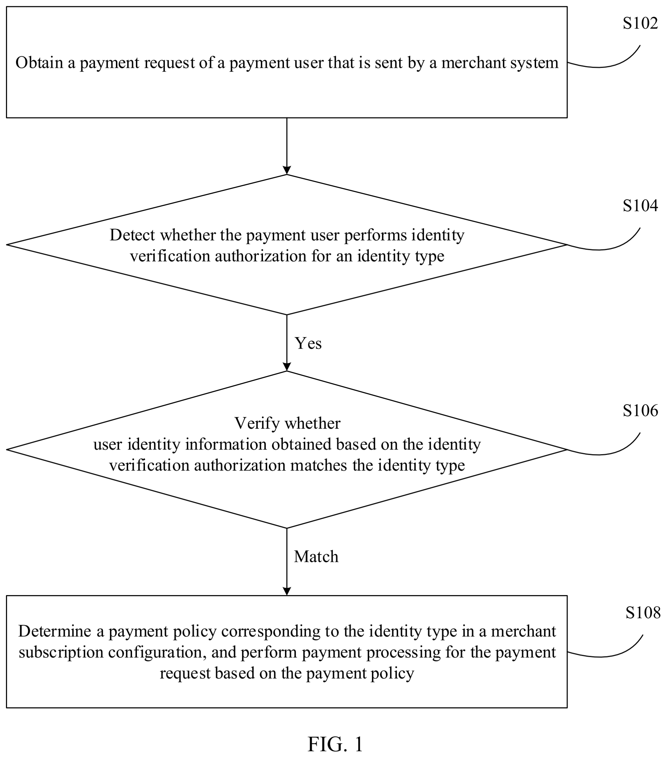

FIG. 1 is a processing flowchart of a user identity-based payment method according to one or more embodiments of this specification;
FIG. 2 is a schematic diagram of a payment submission page according to one or more embodiments of this specification;
FIG. 3 is a schematic diagram of an authorization reminder page according to one or more embodiments of this specification;
FIG. 4 is a schematic diagram of a verification authorization page according to one or more embodiments of this specification;
FIG. 5 is a processing flowchart of a user identity-based payment method applied to an online payment scenario according to one or more embodiments of this specification;
FIG. 6 is a processing flowchart of a user identity-based payment method applied to an offline payment scenario according to one or more embodiments of this specification;
FIG. 7 is a processing flowchart of another user identity-based payment method according to one or more embodiments of this specification;
FIG. 8 is a schematic diagram of a user identity-based payment apparatus according to one or more embodiments of this specification;
FIG. 9 is a schematic diagram of another user identity-based payment apparatus according to one or more embodiments of this specification;
FIG. 10 is a schematic structural diagram of a user identity-based payment device according to one or more embodiments of this specification; and
FIG. 11 is a schematic structural diagram of another user identity-based payment device according to one or more embodiments of this specification.

### DESCRIPTION OF EMBODIMENTS

To make a person skilled in the art understand the technical solutions in one or more embodiments of this specification better, the following clearly and comprehensively describes the technical solutions in the one or more embodiments of this specification with reference to the accompanying drawings in the one or more embodiments of this specification. Clearly, the described embodiments are merely some but not all of the embodiments of this specification. All other embodiments obtained by a person of ordinary skill in the art based on the one or more embodiments of this specification without creative efforts shall fall within the protection scope of this specification.

This specification provides an embodiment of a user identity-based payment method.

According to the user identity-based payment method provided in this application, a payment request is submitted by selecting a payment channel corresponding to an identity type of a payment user. In a process of processing a payment request sent by a merchant system, it is first detected whether the payment user performs identity verification authorization for a current identity type. If the payment user performs identity verification authorization for the current identity type, user identity information of the payment user can be obtained based on the authorization of the payment user, to further verify whether the user identity information matches the current identity type, so as to verify whether an identity of the payment user meets a condition for using the payment channel. When the user identity information matches the current identity type, a payment policy corresponding to the current identity type in a merchant subscription configuration is determined, and finally payment processing is performed for the payment request of the payment user based on the payment policy corresponding to the current identity type, to implement identity-based payment based on the identity type of the payment user. This improves a merchant payment scenario and enhances payment experience of the user. In addition, identity verification and identity-based payment of the payment user are performed in a payment process, and there is no need for a merchant to make system improvements for identity verification and identity-based payment, thereby avoiding costs caused by system improvements made by the merchant. Furthermore, identity verification and identity-based payment of the payment user are performed on a payment side, to avoid disclosure of the user identity information to a merchant side, thereby improving data security of the user identity information.

Step S102: Obtain a payment request of the payment user that is sent by the merchant system.

The merchant system in this embodiment is a processing system that performs order processing in a transaction scenario and cooperates with a payment platform to perform order payment, for example, a background system that generates a transaction order for a transaction initiated by the user through an online channel or an offline channel. Specifically, in a processing process, first, the payment user submits a corresponding payment request for a product or a service. After the payment request is submitted to the merchant system, the merchant system performs order payment of the payment user by sending the payment request to the payment platform. Herein, the payment request of the payment user that is sent by the merchant system is obtained.

Optionally, the payment request carries an identity type corresponding to a payment channel for submitting the payment request. The identity type is a specific identity type possessed by the user. Specifically, the identity type can be an occupational identity type obtained through classification based on an occupation, for example, a teacher type or a doctor type. Alternatively, the identity type can be a social identity type obtained through classification based on a social role, for example, a child type, a student type, a company employee type, or an elderly type. Alternatively, the identity type can be an experiential identity type obtained through classification based on user experience, for example, a retiree type or a veteran type.

The payment channel is a payment access interface configured for the specific identity type, for example, a student payment interface configured for a user of the student type in a ticket purchase process, or for another example, an elderly payment interface that is configured for a user of the elderly type in a dining process at a specific catering institution and that is used to provide a dining subsidy.

Optionally, the payment channel includes an online payment channel, and the payment request is submitted by the payment user to the merchant system through the online payment channel. The online payment channel is a payment channel on which the payment user submits a payment request for the specific identity type in an online access scenario, or a payment channel on which the payment user submits a payment request for the specific identity type in an online transaction scenario.

The online payment channel includes at least one of the following: a payment interface that corresponds to the identity type and that is configured in a merchant application, a payment interface that corresponds to the identity type and that is configured in a merchant subprogram, and a payment interface that corresponds to the identity type and that is configured on a merchant web page. The subprogram includes a program functional module or an application component embedded in a host application, or a program functional module or an application component loaded and installed by a host application, for example, a mini program within an application. From a service perspective, the subprogram has a capability to independently provide a self-closed-loop service, for example, a mini program that has a self-closed-loop capability, that runs within an application and that provides a ticketing service.

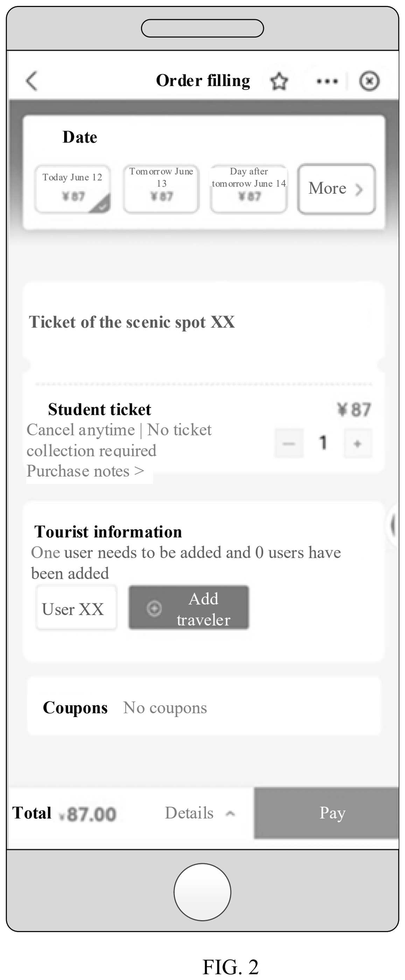

For example, when the user purchases a ticket of a scenic spot in a merchant mini program, if the identity type of the user is a student, a student ticket purchase channel can be selected to purchase a ticket, and a payment submission page shown in FIG. 2 is entered. On the page, a date of visit to the scenic spot is selected, and after information about the user purchasing the ticket is confirmed, a "Pay" button is clicked for payment submission. The "Pay" button is a payment interface for the student identity type. The user submits, to the merchant system by triggering the interface, a payment request for performing ticket purchase payment based on the student identity type. Herein, the payment request submitted to the merchant system carries the student identity type.

In addition to the online payment channel provided above, the payment channel further includes an offline payment channel. The offline payment channel is a payment channel on which the payment user submits a payment request for the specific identity type in an offline access scenario, or a payment channel on which the payment user submits a payment request for the specific identity type in an offline transaction scenario.

Optionally, the offline payment channel includes at least one of the following: a checkout interface that corresponds to the identity type and that is configured in a merchant checkout system and a collection unit that is adapted to the identity type and that is configured in a merchant terminal.

Correspondingly, the payment request is submitted after a payment code of the payment user is scanned by calling the checkout interface, or is submitted after a biometric feature of the payment user is collected through the collection unit and biometric feature recognition is performed.

For example, in a process in which the user performs payment in an offline scenario, a cashier selects a specific identity type for payment on a checkout terminal based on a requirement of the user, and calls the checkout interface by clicking a checkout instruction, to scan the payment two-dimensional code of the user. Subsequently, a background system of the checkout terminal sends a payment request that carries the specific identity type to the payment platform.

Alternatively, in a process in which the user performs payment in an offline scenario, a merchant terminal configures a corresponding face collection component or fingerprint collection component for a specific identity type. In the payment process, if the user wants to perform payment by using the specific identity type, the user can collect a face image or fingerprint feature in the face collection component or the fingerprint collection component corresponding to the specific identity type. After the collected face image or fingerprint feature is uploaded by the merchant terminal to a background system, the background system sends a payment request that carries the specific identity type to the payment platform.

Step S104: Detect whether the payment user performs identity verification authorization for the identity type.

In this embodiment, payment based on the identity type of the payment user, that is, identity-based payment, is provided in a payment process. After the payment request that carries the identity type corresponding to the payment channel for submitting the payment request is obtained, it indicates that the payment request of the payment user is a payment request based on identity-based payment. In a specific identity-based payment process, there is a need to verify whether an identity type submitted or selected by the payment user for identity-based payment matches a real identity type of the payment user. In a process of verifying whether the identity types match each other, user identity information of the payment user needs to be obtained. Therefore, there is a need to detect whether the payment user performs identity verification authorization for the identity type. If the payment user performs identity verification authorization for the identity type, it can be verified, based on the user identity information of the payment user, whether the identity type submitted or selected by the payment user for identity-based payment matches the real identity type of the payment user, to implement an identity-based payment processing process.

During specific implementation, it is detected whether the payment user performs identity verification authorization for the identity type. If yes, it indicates that the payment user has completed the authorization for the current identity type in the identity-based payment processing process, and the following step S106 is performed to verify whether user identity information obtained based on the identity verification authorization matches the identity type.

If no, it indicates that the payment user has not completed the authorization for the current identity type in the identity-based payment processing process. In this case, a payment reminder indicating payment failure can be returned to a user terminal of the payment user, or an authorization reminder indicating that no authorization is performed for the identity type can be returned to a user terminal of the payment user.

In addition, when a detection result of detecting whether the payment user performs identity verification authorization for the identity type is no, that is, when the payment user has not completed the authorization for the current identity type in the identity-based payment processing process, to avoid a case in which a payment procedure of the payment user is interrupted due to the identity verification authorization, an authorization processing process performed in the identity-based payment process is provided in an optional manner provided in this embodiment, and specifically includes: returning a verification authorization page for the identity type to the user terminal of the payment user, receiving an authorization instruction submitted by the user terminal, and making, based on the authorization instruction, a jump to the following step S106 to verify whether user identity information obtained based on the identity verification authorization matches the identity type. In this way, the authorization processing process is introduced into identity-based payment processing, to ensure that the payment process of the payment user can be smoothly performed, thereby increasing a payment success rate of the payment user, and further enhancing payment experience of the payment user.

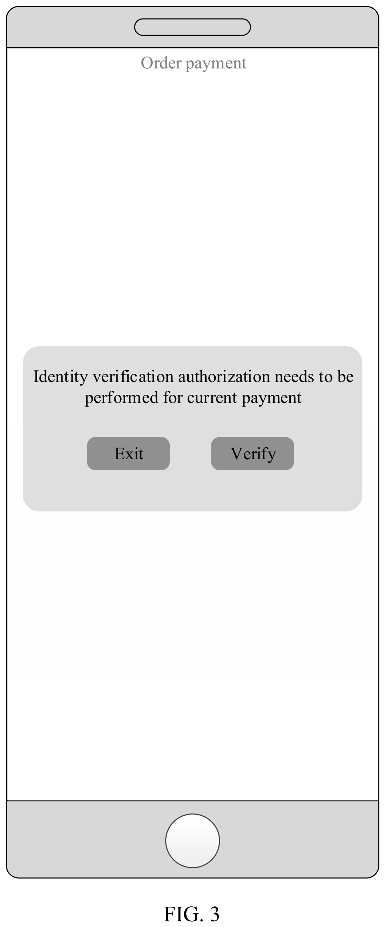

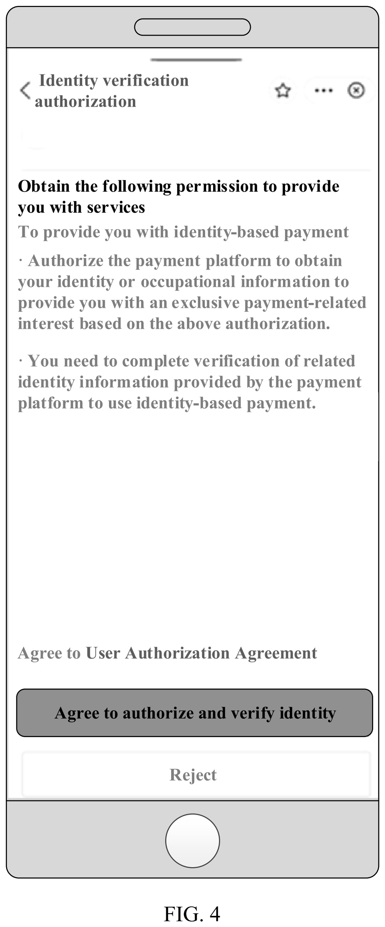

In the above-mentioned example, when the user purchases a ticket of a scenic spot, after the payment request that carries the student identity type is submitted to the merchant system by clicking the "Pay" button that is set on the payment submission page, the merchant system sends the payment request that carries the student identity type to the payment platform. After receiving the payment request, the payment platform detects whether the user performs identity verification authorization for the student identity type. If no identity verification authorization for the student identity type is performed, the payment platform cannot verify, when the user does not perform authorization, whether a real identity type of the user matches the student identity type, and therefore the user needs to perform authorization. Specifically, in an authorization process, when it is detected that the user does not perform identity verification authorization for the student identity type, the payment platform can return an authorization reminder, for example, an authorization reminder displayed on an authorization reminder page shown in FIG. 3, by using a payment application installed on the user terminal. After the user clicks a "Verify" button to determine to perform identity verification authorization for the student identity type, a verification authorization page can be returned by using the payment application. As shown in FIG. 4, if the user clicks an "Agree to authorize and verify identity" button, identity verification authorization for the student identity type can be performed for the user.

In actual application, during introduction of the authorization processing process into identity-based payment processing, there is a possibility that the authorization processing process cannot be performed because identity information is missing or the like. In view of this, to improve effectiveness of identity-based payment, the processing process that is provided above and that is of returning a verification authorization page for the identity type to the user terminal of the payment user, receiving an authorization instruction submitted by the user terminal, and making, based on the authorization instruction, a jump to the following step S106 can be replaced with a process of returning a verification authorization page for the identity type to the user terminal of the payment user, receiving an authorization instruction submitted by the user terminal, and if authorization processing of the identity verification performed based on the identity information of the payment user after the authorization instruction is received succeeds, making a jump to the following step S106. In addition, if authorization processing of the identity verification performed based on the identity information of the payment user after the authorization instruction is received fails, to further lower a probability that a payment procedure of the payment user is interrupted due to the identity verification authorization, and increase a payment success rate of the payment user, in an optional implementation provided in this embodiment, if the authorization processing of the identity verification performed based on the identity information of the payment user after the authorization instruction is received fails, an information supplement reminder of the identity verification is generated and returned to the authorization subprogram, and authorization processing of the identity verification is performed based on the identity information and supplementary identity information submitted by the authorization subprogram.

As described above, the payment channel for submitting the payment request that carries the identity type includes an online payment channel and/or an offline payment channel. In an actual scenario, transaction scenarios of the payment user at different times may cover an online transaction scenario and an offline transaction scenario, and it may be quite inconvenient to perform authorization processing in an identity-based payment process in the offline transaction scenario. Therefore, to enhance payment experience in the offline transaction scenario, when the current payment channel for submitting the payment request that carries the identity type is an offline payment channel, the detected identity verification authorization for the identity type that is performed by the payment user can be identity verification authorization for the identity type that is previously performed by the payment user in an online transaction scenario. Optionally, when the payment request carries an identity type corresponding to the offline payment channel, the identity verification authorization for the identity type is performed in a payment processing process for a historical payment request that carries the identity type and that is submitted by the payment user through an online payment channel.

Correspondingly, when the current payment channel for submitting the payment request that carries the identity type is an online payment channel, the detected identity verification authorization for the identity type that is performed by the payment user can be identity verification authorization for the identity type that is previously performed by the payment user in an offline transaction scenario. Optionally, when the payment request carries an identity type corresponding to the online payment channel, the identity verification authorization for the identity type is performed in a payment processing process for a historical payment request that carries the identity type and that is submitted by the payment user through an offline payment channel.

In addition, during specific implementation, to enhance flexibility of the identity verification authorization for the identity type of the payment user, this embodiment further provides an implementation of performing identity verification authorization through an authorization subprogram. It should be noted that the identity verification authorization performed through the authorization subprogram can be performed by the payment user before payment, or can be performed by calling the authorization subprogram when it is detected that the payment user does not perform identity verification authorization for the identity type in a process of performing identity-based payment for the payment request of the payment user.

Specifically, in an optional implementation provided in this embodiment, the identity verification authorization for the identity type is implemented in the following manner: obtaining an authorization request, submitted by the payment user through the authorization subprogram, for performing identity verification for the identity type, and returning a verification authorization page to the authorization subprogram; and performing authorization processing of the identity verification for the payment user based on identity information and an authorization instruction that are submitted by the authorization subprogram.

Specifically, in a process of performing authorization processing of the identity verification for the payment user, if the identity verification authorization for the current identity type is performed before payment, after the authorization processing of the identity verification performed for the payment user succeeds, an authorization success reminder is displayed through the authorization subprogram or no processing is performed. In addition, after the authorization processing of the identity verification performed for the payment user fails, to further improve processing logic of the identity verification authorization, and increase a success rate of the identity verification authorization, in an optional implementation provided in this embodiment, an information supplement reminder of the identity verification is generated and returned to the authorization subprogram; and authorization processing of the identity verification is performed based on the identity information and supplementary identity information submitted by the authorization subprogram.

If the identity verification authorization for the current identity type is performed in the process of performing identity-based payment for the payment request of the payment user, after the authorization processing of the identity verification performed for the payment user succeeds, a jump to the following step S106 is made. In addition, after the authorization processing of the identity verification performed for the payment user fails, to improve processing logic of the identity verification authorization, and increase a success rate of the identity verification authorization, in an optional implementation provided in this embodiment, an information supplement reminder of the identity verification is generated and returned to the authorization subprogram; and authorization processing of the identity verification is performed based on the identity information and supplementary identity information submitted by the authorization subprogram.

Step S106: Verify whether user identity information obtained based on the identity verification authorization matches the identity type.

As described above, in this embodiment, payment based on the identity type of the payment user, that is, identity-based payment, is provided in a payment process. After the payment request that carries the identity type corresponding to the payment channel for submitting the payment request is obtained, it indicates that the payment request of the payment user is a payment request based on identity-based payment. In a specific identity-based payment process, there is a need to verify whether an identity type submitted or selected by the payment user for identity-based payment matches a real identity type of the payment user. In this step, it is verified whether the user identity information obtained based on the identity verification authorization matches the identity type, to verify whether the identity type submitted or selected by the payment user for identity-based payment matches the real identity type of the payment user.

During specific implementation, in a process of verifying whether the user identity information obtained based on the identity verification authorization matches the identity type, if a verification result is that the user identity information matches the identity type, it indicates that the user identity information of the payment user matches the identity type currently used for identity-based payment, identity-based payment can be performed for the payment request of the payment user, and step S108 is performed to determine a payment policy corresponding to the identity type in a merchant subscription configuration, and perform payment processing for the payment request based on the payment policy.

In addition, if the user identity information obtained based on the identity verification authorization does not match the identity type, to ensure that the payment request of the payment user can be processed, so as to ensure that the payment procedure can be performed, in an optional implementation provided in this embodiment, payment processing for the payment request is performed based on a payment method corresponding to a non-specific identity type in the merchant subscription configuration.

The merchant subscription configuration in this embodiment is payment-related information preconfigured by the merchant for transaction payment between the merchant and the user. The merchant subscription configuration can include a payment policy configured for the payment user of the specific identity type. In addition, the merchant subscription configuration can further include a payment method configured for a payment user of the non-specific identity type. The payment user of the non-specific identity type can include a payment user that does not have the specific identity type or a payment user whose identity type is empty. In a process of configuring the payment-related information, the merchant can configure the payment-related information by signing a contract with the payment platform. The payment-related information can also be written into an agreement signed between the merchant and the payment platform.

It should be noted that in practice, if the user identity information obtained based on the identity verification authorization is incomplete or key information is missing, it is possible that the user identity information does not match the identity type, that is, a verification result of verifying whether the user identity information obtained based on the identity verification authorization matches the identity type is that the user identity information does not match the identity type. In view of this, when the user identity information obtained based on the identity verification authorization does not match the identity type, in an optional implementation provided in this embodiment, secondary verification processing is performed in the following manner: generating an information supplement reminder of identity verification for the identity type, returning the information supplement reminder to a user terminal of the payment user, and obtaining supplementary identity information submitted by the user terminal; and verifying whether the user identity information and the supplementary identity information match the identity type, and if yes, making a jump to step S108; or if no, returning a payment failure result to the user terminal, or performing payment processing for the payment request based on a payment configuration for a non-admissible identity type in the merchant subscription configuration.

In a first optional implementation provided in this embodiment, the user identity information is obtained in the following manner: detecting whether the identity type is an intra-domain identity type; and if yes, querying an identity certificate and/or an occupation certificate of the payment user in an intra-domain database based on the identity verification authorization; or if no, sending a query request for an authorization record that carries the identity verification authorization to a data platform corresponding to the identity type through an interface call; and receiving identity information that is of the payment user in a case of the identity type and that is returned by the third-party data platform.

The intra-domain identity type is an identity type of the payment user that is determined by a processing platform that belongs to a same data domain as the payment platform, or can be an identity type determined based on identity-related information of a payment user in a data domain to which the payment platform belongs. The data domain can be obtained through classification from a perspective of whether data transmission or obtaining needs to be performed across a data gateway.

In a second optional implementation provided in this embodiment, the user identity information is obtained in the following manner: sending a query request for an authorization record that carries the identity verification authorization to a data platform corresponding to the identity type through an interface call; and receiving identity information that is of the payment user in a case of the identity type and that is returned by the third-party data platform.

In addition to the two optional implementations provided above, to improve integrity and accuracy of the obtained user identity information, the user identity information can be obtained by combining the two optional implementations provided above. For example, an identity certificate and/or an occupation certificate of the payment user are/is queried in an intra-domain database based on the identity verification authorization; a query request for an authorization record that carries the identity verification authorization is sent to a data platform corresponding to the identity type through an interface call; identity information that is of the payment user in a case of the identity type and that is returned by the third-party data platform is received; and the identity information and the identity certificate and/or the occupation certificate are used as the user identity information.

Step S108: Determine a payment policy corresponding to the identity type in a merchant subscription configuration, and perform payment processing for the payment request based on the payment policy.

The merchant subscription configuration in this embodiment is payment-related information preconfigured by the merchant for transaction payment between the merchant and the user. The merchant subscription configuration can include a payment policy configured for the payment user of the specific identity type. In addition, the merchant subscription configuration can further include a payment method configured for a payment user of the non-specific identity type. The payment user of the non-specific identity type can include a payment user that does not have the specific identity type or a payment user whose identity type is empty. In a process of configuring the payment-related information, the merchant can configure the payment-related information by signing a contract with the payment platform. The payment-related information can also be written into an agreement signed between the merchant and the payment platform.

The payment policy corresponding to the identity type includes a payment interest corresponding to the identity type. The payment interest includes at least one of the following: coupon payment, discount payment, coupon issuance after payment, and payment for granting specific resource redemption (point redemption).

In an optional implementation provided in this embodiment, determining the payment policy corresponding to the identity type in a merchant subscription configuration, and performing payment processing for the payment request based on the payment policy includes: determining a payment interest corresponding to the identity type in the merchant subscription configuration; and calculating an actual payment amount for the payment request based on the payment interest, returning the actual payment amount to a user terminal of the payment user, and performing payment processing for the payment request based on a payment confirmation instruction submitted by the user terminal.

In addition, in actual application, some merchants may be involved in a wide transaction scenario range. To avoid excessive configuration complexity caused by configuring a unified merchant subscription configuration for all global transaction scenario ranges and improve response efficiency of the process of determining the payment interest corresponding to the identity type of the payment user in the merchant subscription configuration, so as to reduce time consumed for identity-based payment, different merchant subscription configurations can be set for payment requests of different payment types. In view of this, determining the payment policy corresponding to the identity type in the merchant subscription configuration, and performing the payment processing for the payment request based on the payment policy includes: determining, in a merchant subscription configuration corresponding to a payment type to which the payment request belongs, a payment interest corresponding to the identity type; and performing payment processing for the payment request based on the payment interest.

Specifically, in a process of performing payment processing for the payment request based on the payment interest, payment processing can also be performed in the processing manner that is provided above and that is of calculating an actual payment amount for the payment request based on the payment interest, returning the actual payment amount to a user terminal of the payment user, and performing payment processing for the payment request based on a payment confirmation instruction submitted by the user terminal.

In practice, many payment scenarios are associated with or bound to marketing activities in offline or online scenarios, to enhance user payment enthusiasm. For this scenario, in an optional implementation provided in this embodiment, after payment processing for the payment request is performed based on the payment interest, the following operations are performed: determining, based on a channel type of the payment channel, an additional interest corresponding to the channel type in the merchant subscription configuration; and generating an interest issuance task for issuing the additional interest to the payment user through an offline channel, and/or granting service permission corresponding to the additional interest to the payment user.

In conclusion, according to the user identity-based payment method provided in this embodiment, in a process of performing payment processing for a payment request that carries an identity type and that is sent by a merchant system, identity-based payment is performed based on an identity type of a payment user. A payment platform that performs the user identity-based payment method performs identity verification and a payment processing process based on the identity type, and the merchant system does not need to perform complex identity verification authorization detection and identity type verification processing, thereby reducing implementation difficulty and system transformation costs for the merchant system in an identity-based payment processing process performed based on the identity type of the payment user. In addition, the merchant system does not perform identity verification authorization detection and an identity type verification processing process, to avoid disclosure of identity information of the payment user to the merchant system, thereby improving security of the identity information of the payment user. Furthermore, in an identity-based payment process, it is detected whether the payment user performs identity verification authorization for the identity type. In the identity-based payment process, verification authorization logic for the identity type is provided to a payment user that does not perform identity verification authorization. Therefore, an authorization processing process is introduced into identity-based payment processing, to ensure that a payment process of the payment user can be smoothly performed, thereby lowering a probability that the payment procedure of the payment user is interrupted due to the identity verification authorization, increasing a payment success rate of the payment user, and further enhancing payment experience of the payment user. Further, in a process of verifying whether user identity information obtained based on the identity verification authorization matches the identity type, an implementation for supplementing identity information is further provided, to avoid a case in which identity-based payment is interrupted because the user identity information obtained based on the identity verification authorization is incomplete or key information is missing, so as to further optimize the identity-based payment processing process and increase the payment success rate.

An implementation process of the user identity-based payment method provided above can be performed by a payment platform. An implementation process of another user identity-based payment method provided in the following method embodiment can be performed by a user terminal. The two can cooperate with each other in an execution process. Therefore, for reading of the above-mentioned implementation process, refer to corresponding content in the following method embodiment. Correspondingly, for reading of the following implementation process, refer to corresponding content in the above-mentioned method embodiment.

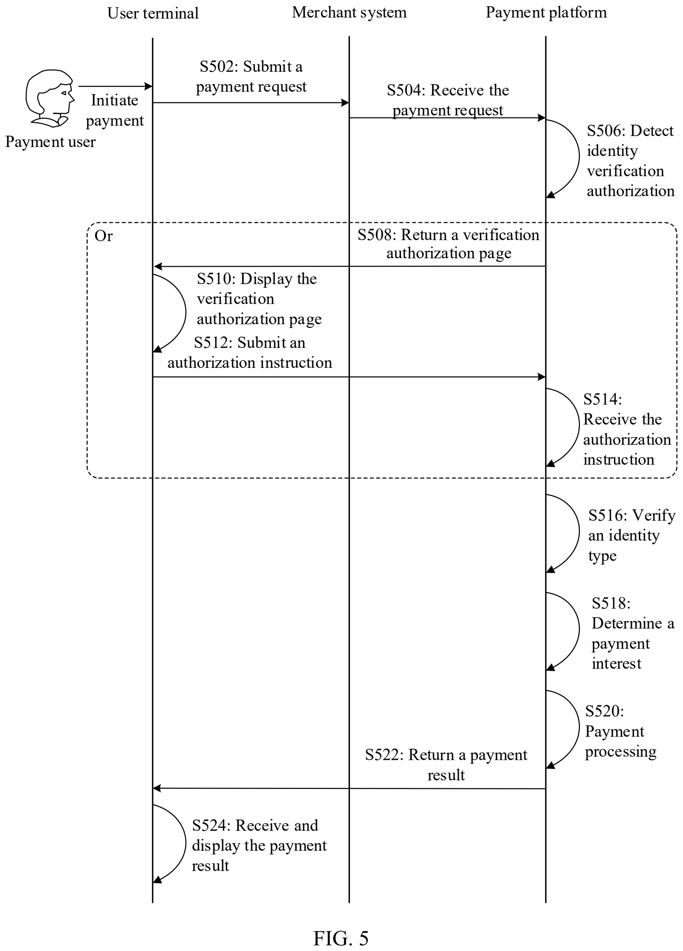

With reference to FIG. 5, the following further describes, by using an application of the user identity-based payment method provided in the embodiments to an online payment scenario as an example, the user identity-based payment method provided in the embodiments. With reference to FIG. 5, the user identity-based payment method applied to the online payment scenario specifically includes the following steps.

Step S504: Receive a payment request that is sent by a merchant system and that carries an identity type corresponding to an online payment channel.

Step S506: Detect whether a payment user corresponding to the payment request performs identity verification authorization for the identity type. If yes, step S516 is performed. If no, step S508 to step S512 are performed. Step S508: Return a verification authorization page for the identity type to a user terminal.

Step S514: Receive an authorization instruction submitted by the user terminal.

If authorization processing of identity verification performed based on identity information of the payment user after the authorization instruction is received succeeds, step S516 is performed.

Step S516: Verify whether user identity information obtained based on the identity verification authorization matches the identity type. If yes, step S518 to step S522 are performed. If no, payment processing for the payment request is performed based on a payment method corresponding to a non-specific identity type in a merchant subscription configuration.

Step S518: Determine a payment interest corresponding to the identity type in the merchant subscription configuration.

Step S520: Calculate an actual payment amount for the payment request based on the payment interest, return the actual payment amount to the user terminal of the payment user, and perform payment processing based on a payment confirmation instruction submitted by the user terminal.

Step S522: Return a payment result of the payment processing to the user terminal.

Step S504 to step S508, step S514, and step S522 provided in this embodiment are performed by a payment platform. It should be noted that a processing process of step S504 to step S508, step S514, and step S522 performed by the payment platform can cooperate, in an execution process, with a processing process of step S502, step S510, step S512, and step S524 performed by the user terminal in the following embodiment. Therefore, for reading of this embodiment, refer to corresponding content of step S502, step S510, step S512, and step S524 provided in the following method embodiment.

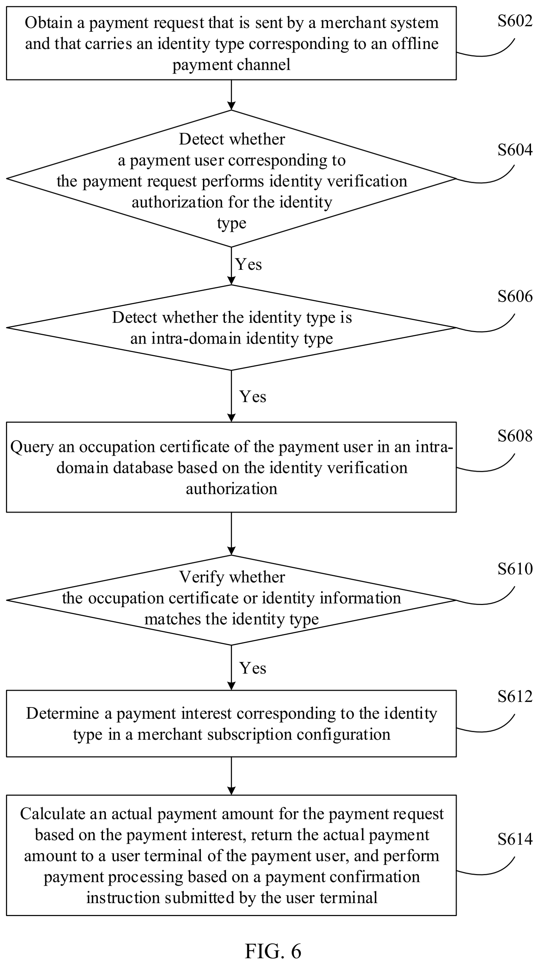

With reference to FIG. 6, the following further describes, by using an application of the user identity-based payment method provided in the embodiments to an offline payment scenario as an example, the user identity-based payment method provided in the embodiments. With reference to FIG. 6, the user identity-based payment method applied to the offline payment scenario specifically includes the following steps.

Step S602: Obtain a payment request that is sent by a merchant system and that carries an identity type corresponding to an offline payment channel. Step S604: Detect whether a payment user corresponding to the payment request performs identity verification authorization for the identity type. If yes, step S606 is performed. If no, a payment failure reminder is returned.

Step S606: Detect whether the identity type is an intra-domain identity type. If yes, step S608 is performed. If no, a query request for an authorization record that carries the identity verification authorization is sent to a data platform corresponding to the identity type through an interface call, and identity information that is of the payment user in a case of the identity type and that is returned by the third-party data platform is received.

Step S608: Query an occupation certificate of the payment user in an intra-domain database based on the identity verification authorization.

Step S610: Verify whether the occupation certificate or the identity information matches the identity type. If yes, step S612 and step S614 are performed. If no, payment processing for the payment request is performed based on a payment method corresponding to a non-specific identity type in a merchant subscription configuration.

Step S612: Determine a payment interest corresponding to the identity type in the merchant subscription configuration.

Step S614: Calculate an actual payment amount for the payment request based on the payment interest, return the actual payment amount to a user terminal of the payment user, and perform payment processing based on a payment confirmation instruction submitted by the user terminal.

This specification provides an embodiment of another user identity-based payment method. Step S702: Submit, to a merchant system based on a payment channel selected by a user by using a merchant application, a payment request that carries an identity type corresponding to the payment channel.

The merchant system in this embodiment is a processing system that performs order processing in a transaction scenario and cooperates with a payment platform to perform order payment, for example, a background system that generates a transaction order for a transaction initiated by the user through an online channel or an offline channel. Specifically, in a processing process, first, the payment user submits a corresponding payment request for a product or a service. After the payment request is submitted to the merchant system, the merchant system performs order payment of the payment user by sending the payment request to the payment platform. Herein, the payment request of the payment user that is sent by the merchant system is obtained.

Optionally, the payment request carries an identity type corresponding to a payment channel for submitting the payment request. The identity type is a specific identity type possessed by the user. Specifically, the identity type can be an occupational identity type obtained through classification based on an occupation, for example, a teacher type or a doctor type. Alternatively, the identity type can be a social identity type obtained through classification based on a social role, for example, a child type, a student type, a company employee type, or an elderly type. Alternatively, the identity type can be an experiential identity type obtained through classification based on user experience, for example, a retiree type or a veteran type.

The payment channel is a payment access interface configured for the specific identity type, for example, a student payment interface configured for a user of the student type in a ticket purchase process, or for another example, an elderly payment interface that is configured for a user of the elderly type in a dining process at a specific catering institution and that is used to provide a dining subsidy.

Optionally, the payment channel includes an online payment channel, and the payment request is submitted by the payment user to the merchant system through the online payment channel. The online payment channel is a payment channel on which the payment user submits a payment request for the specific identity type in an online access scenario, or a payment channel on which the payment user submits a payment request for the specific identity type in an online transaction scenario.

The online payment channel includes at least one of the following: a payment interface that corresponds to the identity type and that is configured in a merchant application, a payment interface that corresponds to the identity type and that is configured in a merchant subprogram, and a payment interface that corresponds to the identity type and that is configured on a merchant web page. The subprogram includes a program functional module or an application component embedded in a host application, or a program functional module or an application component loaded and installed by a host application, for example, a mini program within an application. From a service perspective, the subprogram has a capability to independently provide a self-closed-loop service, for example, a mini program that has a self-closed-loop capability, that runs within an application and that provides a ticketing service.

For example, when the user purchases a ticket of a scenic spot in a merchant mini program, if an identity type of the user is a student, a student ticket purchase channel can be selected to purchase a ticket, and a payment submission page shown in FIG. 2 is entered. On the page, a date of visit to the scenic spot is selected, and after information about the user purchasing the ticket is confirmed, a "Pay" button is clicked for payment submission. The "Pay" button is a payment interface for the student identity type. The user submits, to the merchant system by triggering the interface, a payment request for performing ticket purchase payment based on the student identity type. Herein, the payment request submitted to the merchant system carries the student identity type.

Step S704: Receive a verification authorization page for the identity type that is returned by a payment platform, and submit an authorization instruction to the payment platform to perform identity verification authorization.

During specific implementation, after the payment request that carries the identity type corresponding to the payment channel is sent by the merchant system to the payment platform, the payment platform performs payment based on the identity type of the payment user, that is, identity-based payment. In a specific identity-based payment process, the payment platform needs to verify whether an identity type submitted or selected by the payment user for identity-based payment matches a real identity type of the payment user. In a process of verifying whether the identity types match each other, user identity information of the payment user needs to be obtained. Therefore, there is a need to detect whether the payment user performs identity verification authorization for the identity type.

If the payment user does not perform identity verification authorization for the identity type, to avoid a case in which a payment procedure of the payment user is interrupted due to the identity verification authorization, the payment platform provides an authorization processing process performed in the identity-based payment process. Specifically, in the authorization processing process, the verification authorization page for the identity type is returned to a user terminal of the payment user. In this step, the verification authorization page for the identity type that is returned by the payment platform is received, and the authorization instruction is submitted to the payment platform to perform identity verification authorization.

It should be noted that in a process in which the payment platform performs identity verification authorization after receiving the authorization instruction, there is a possibility that the authorization processing process cannot be performed because identity information is missing or the like. In view of this, to lower a probability that a payment procedure of the payment user is interrupted due to the identity verification authorization, and increase a payment success rate of the payment user, in an identity verification authorization processing process, if authorization processing fails, the payment platform can generate an information supplement reminder of the identity verification, and return the information supplement reminder to the authorization subprogram. Herein, the information supplement reminder that is of the identity verification for the identity type and that is returned by the payment platform is received; and supplementary identity information entered by the payment user for the information supplement reminder is submitted to the payment platform, to perform authorization processing of the identity verification.

Step S706: Obtain and display a payment result of payment processing performed by the payment platform for the payment request.

Optionally, the payment processing is performed based on a payment policy corresponding to the identity type in a merchant subscription configuration when user identity information obtained based on the identity verification authorization matches the identity type.

The merchant subscription configuration in this embodiment is payment-related information preconfigured by the merchant for transaction payment between the merchant and the user. The merchant subscription configuration can include a payment policy configured for the payment user of the specific identity type. In addition, the merchant subscription configuration can further include a payment method configured for a payment user of the non-specific identity type. The payment user of the non-specific identity type can include a payment user that does not have the specific identity type or a payment user whose identity type is empty. In a process of configuring the payment-related information, the merchant can configure the payment-related information by signing a contract with the payment platform. The payment-related information can also be written into an agreement signed between the merchant and the payment platform.

The payment policy corresponding to the identity type includes a payment interest corresponding to the identity type. The payment interest includes at least one of the following: coupon payment, discount payment, coupon issuance after payment, and payment for granting specific resource redemption (point redemption).

In a specific execution process, the payment platform can perform payment processing for the payment request in the following manner: determining a payment interest corresponding to the identity type in the merchant subscription configuration; and calculating an actual payment amount for the payment request based on the payment interest, returning the actual payment amount to a user terminal of the payment user, and performing payment processing for the payment request based on a payment confirmation instruction submitted by the user terminal.

Correspondingly, in an optional implementation provided in this embodiment, the following operations are performed to cooperate with the payment platform to perform payment processing for the payment request: receiving and displaying an actual payment amount returned by the payment platform, where the actual payment amount is calculated based on a payment interest corresponding to the identity type in the merchant subscription configuration; and submitting a payment confirmation instruction entered by the payment user for the actual payment amount to the payment platform.

It should be noted that many payment scenarios are associated with or bound to marketing activities in offline or online scenarios, to enhance user payment enthusiasm. For this scenario, in a process in which the payment platform performs payment processing for the payment request, after payment processing for the payment request is performed based on the payment confirmation instruction submitted by the user terminal, the following operations can be further performed: determining, based on a channel type of the payment channel, an additional interest corresponding to the channel type in the merchant subscription configuration; and generating an interest issuance task for issuing the additional interest to the payment user through an offline channel, and/or granting service permission corresponding to the additional interest to the payment user.

In a first optional implementation provided in this embodiment, the user identity information is obtained in the following manner: detecting whether the identity type is an intra-domain identity type; and if yes, querying an identity certificate and/or an occupation certificate of the payment user in an intra-domain database based on the identity verification authorization; or if no, sending a query request for an authorization record that carries the identity verification authorization to a data platform corresponding to the identity type through an interface call; and receiving identity information that is of the payment user in a case of the identity type and that is returned by the third-party data platform.

The intra-domain identity type is an identity type of the payment user that is determined by a processing platform that belongs to a same data domain as the payment platform, or can be an identity type determined based on identity-related information of a payment user in a data domain to which the payment platform belongs. The data domain can be obtained through classification from a perspective of whether data transmission or obtaining needs to be performed across a data gateway.

In a second optional implementation provided in this embodiment, the user identity information is obtained in the following manner: sending a query request for an authorization record that carries the identity verification authorization to a data platform corresponding to the identity type through an interface call; and receiving identity information that is of the payment user in a case of the identity type and that is returned by the third-party data platform.

In addition to the two optional implementations provided above, to improve integrity and accuracy of the obtained user identity information, the user identity information can be obtained by combining the two optional implementations provided above. For example, an identity certificate and/or an occupation certificate of the payment user are/is queried in an intra-domain database based on the identity verification authorization; a query request for an authorization record that carries the identity verification authorization is sent to a data platform corresponding to the identity type through an interface call; identity information that is of the payment user in a case of the identity type and that is returned by the third-party data platform is received; and the identity information and the identity certificate and/or the occupation certificate are used as the user identity information.

With reference to FIG. 5, the following further describes, by using an application of the user identity-based payment method provided in the embodiments to an online payment scenario as an example, the user identity-based payment method provided in the embodiments. With reference to FIG. 5, the user identity-based payment method applied to the online payment scenario specifically includes the following steps.

Step S502: Submit, to a merchant system based on an online payment channel selected by a user by using a merchant application, a payment request that carries an identity type corresponding to the payment channel.

After the payment request is submitted to the merchant system, the merchant system sends the payment request to a payment platform.

Step S510: Receive and display a verification authorization page for the identity type that is returned by the payment platform.

Step S512: Submit an authorization instruction to the payment platform to perform identity verification authorization.

Step S524: Receive and display a payment result of the payment request that is returned by the payment platform.

An embodiment of a user identity-based payment apparatus provided in this specification is as follows: In the above-mentioned embodiment, the user identity-based payment method is provided. Correspondingly, a user identity-based payment apparatus is further provided, and is described below with reference to the accompanying drawings.

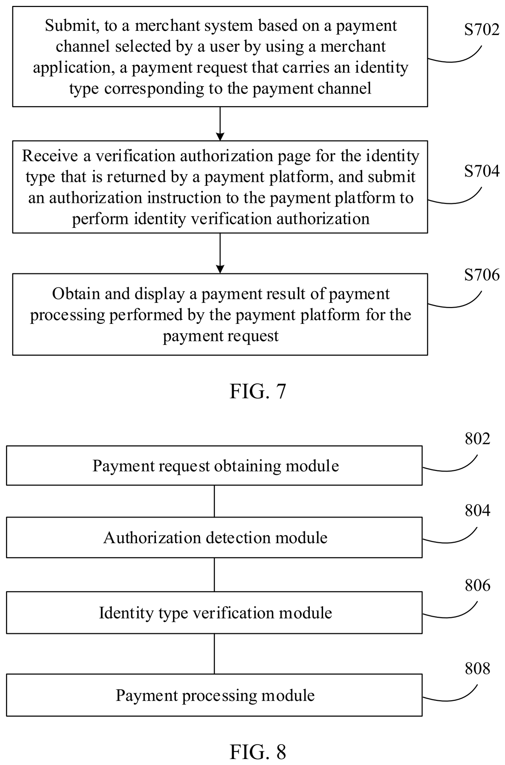

FIG. 8 is a schematic diagram of a user identity-based payment apparatus according to an embodiment.

The apparatus embodiment corresponds to the method embodiment, and therefore is briefly described. For a related part, refer to the corresponding descriptions of the method embodiment provided above. The apparatus embodiment described below is merely an example.

This user identity-based payment apparatus provided in this embodiment includes: a payment request obtaining module 802, configured to obtain a payment request of a payment user that is sent by a merchant system, where the payment request carries an identity type corresponding to a payment channel for submitting the payment request; and an authorization detection module 804, configured to detect whether the payment user performs identity verification authorization for the identity type, where if yes, an identity type verification module 806 is run, and the identity type verification module 806 is configured to verify whether user identity information obtained based on the identity verification authorization matches the identity type; and if the user identity information matches the identity type, a payment processing module 808 is run, and the payment processing module 808 is configured to: determine a payment policy corresponding to the identity type in a merchant subscription configuration, and perform payment processing for the payment request based on the payment policy.

An embodiment of another user identity-based payment apparatus provided in this specification is as follows: In the above-mentioned embodiment, the another user identity-based payment method is provided. Correspondingly, another user identity-based payment apparatus is further provided, and is described below with reference to the accompanying drawings.

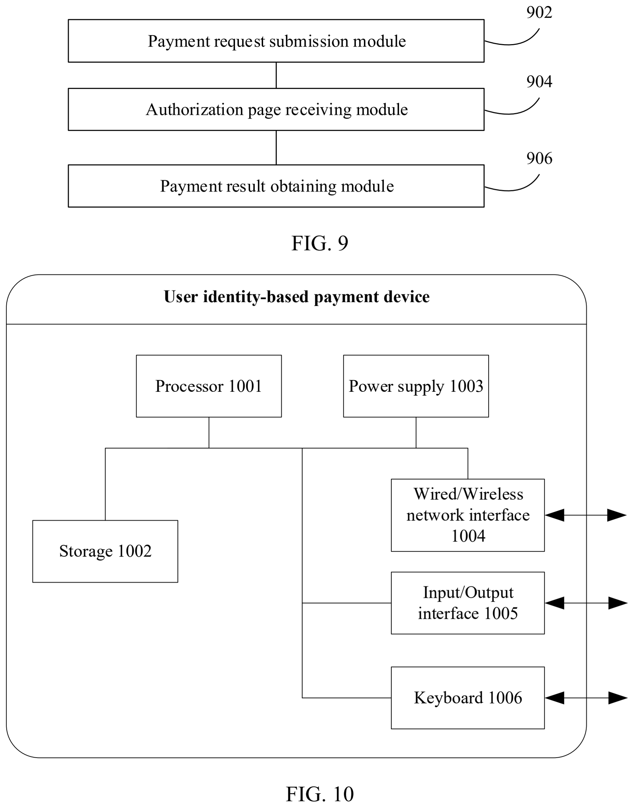

FIG. 9 is a schematic diagram of a user identity-based payment apparatus according to an embodiment.

The apparatus embodiment corresponds to the method embodiment, and therefore is briefly described. For a related part, refer to the corresponding descriptions of the method embodiment provided above. The apparatus embodiment described below is merely an example.

The user identity-based payment apparatus provided in this embodiment includes: a payment request submission module 902, configured to submit, to a merchant system based on a payment channel selected by a user by using a merchant application, a payment request that carries an identity type corresponding to the payment channel; an authorization page receiving module 904, configured to: receive a verification authorization page for the identity type that is returned by a payment platform, and submit an authorization instruction to the payment platform to perform identity verification authorization; and a payment result obtaining module 906, configured to obtain and display a payment result of payment processing performed by the payment platform for the payment request, where the payment processing is performed based on a payment policy corresponding to the identity type in a merchant subscription configuration when user identity information obtained based on the identity verification authorization matches the identity type.

An embodiment of a user identity-based payment device provided in this specification is as follows: Corresponding to the user identity-based payment method described above, based on a same technical concept, one or more embodiments of this specification further provide a user identity-based payment device. The user identity-based payment device is configured to perform the user identity-based payment method provided above. FIG. 10 is a schematic structural diagram of a user identity-based payment device according to one or more embodiments of this specification.

The user identity-based payment device provided in this embodiment includes the following: As shown in FIG. 10, the user identity-based payment device can vary greatly based on a configuration or performance, and can include one or more processors 1001 and a storage 1002. The storage 1002 can store one or more storage applications or data. The storage 1002 can be a transitory storage or persistent storage. The application stored in the storage 1002 can include one or more modules (not shown in the figure), and each module can include a series of computer-executable instructions in the user identity-based payment device. Further, the processor 1001 can be configured to communicate with the storage 1002, and execute the series of computer-executable instructions in the storage 1002 on the user identity-based payment device. The user identity-based payment device can further include one or more power supplies 1003, one or more wired or wireless network interfaces 1004, one or more input/output interfaces 1005, one or more keyboards 1006, etc.

In a specific embodiment, the user identity-based payment device includes a storage and one or more programs. The one or more programs are stored in the storage. The one or more programs can include one or more modules, and each module can include a series of computer-executable instructions in the user identity-based payment device. The one or more processors are configured to execute the computer-executable instructions included in the one or more programs to perform the following operations: obtaining a payment request of a payment user that is sent by a merchant system, where the payment request carries an identity type corresponding to a payment channel for submitting the payment request; detecting whether the payment user performs identity verification authorization for the identity type; if yes, verifying whether user identity information obtained based on the identity verification authorization matches the identity type; and if the user identity information matches the identity type, determining a payment policy corresponding to the identity type in a merchant subscription configuration, and performing payment processing for the payment request based on the payment policy.

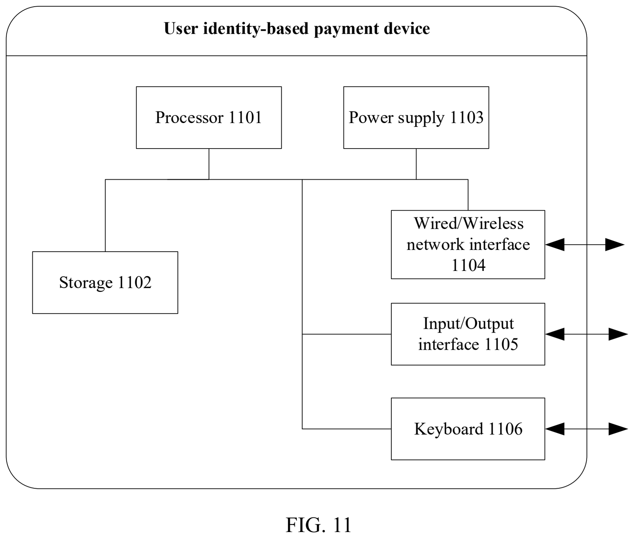

An embodiment of another user identity-based payment device provided in this specification is as follows: Corresponding to the another user identity-based payment method described above, based on a same technical concept, one or more embodiments of this specification further provide another user identity-based payment device. The user identity-based payment device is configured to perform the user identity-based payment method provided above. FIG. 11 is a schematic structural diagram of another user identity-based payment device according to one or more embodiments of this specification.

The user identity-based payment device provided in this embodiment includes the following: As shown in FIG. 11, the user identity-based payment device can vary greatly based on a configuration or performance, and can include one or more processors 1101 and a storage 1102. The storage 1102 can store one or more storage applications or data. The storage 1102 can be a transitory storage or persistent storage. The application stored in the storage 1102 can include one or more modules (not shown in the figure), and each module can include a series of computer-executable instructions in the user identity-based payment device. Further, the processor 1101 can be configured to communicate with the storage 1102, and execute the series of computer-executable instructions in the storage 1102 on the user identity-based payment device. The user identity-based payment device can further include one or more power supplies 1103, one or more wired or wireless network interfaces 1104, one or more input/output interfaces 1105, one or more keyboards 1106, etc.

In a specific embodiment, the user identity-based payment device includes a storage and one or more programs. The one or more programs are stored in the storage. The one or more programs can include one or more modules, and each module can include a series of computer-executable instructions in the user identity-based payment device. The one or more processors are configured to execute the computer-executable instructions included in the one or more programs to perform the following operations: submitting, to a merchant system based on a payment channel selected by a user by using a merchant application, a payment request that carries an identity type corresponding to the payment channel; receiving a verification authorization page for the identity type that is returned by a payment platform, and submitting an authorization instruction to the payment platform to perform identity verification authorization; and obtaining and displaying a payment result of payment processing performed by the payment platform for the payment request, where the payment processing is performed based on a payment policy corresponding to the identity type in a merchant subscription configuration when user identity information obtained based on the identity verification authorization matches the identity type.

An embodiment of a storage medium provided in this specification is as follows: Corresponding to the user identity-based payment method described above, based on a same technical concept, one or more embodiments of this specification further provide a storage medium.

The storage medium provided in this embodiment is configured to store computer-executable instructions. When the computer-executable instructions are executed by a processor, the following procedure is implemented: obtaining a payment request of a payment user that is sent by a merchant system, where the payment request carries an identity type corresponding to a payment channel for submitting the payment request; detecting whether the payment user performs identity verification authorization for the identity type; if yes, verifying whether user identity information obtained based on the identity verification authorization matches the identity type; and if the user identity information matches the identity type, determining a payment policy corresponding to the identity type in a merchant subscription configuration, and performing payment processing for the payment request based on the payment policy.

It should be noted that the embodiment of the storage medium in this specification and the embodiment of the user identity-based payment method in this specification are based on a same invention concept. Therefore, for specific implementation of this embodiment, refer to the implementation of the above-mentioned corresponding method, and repeated parts are omitted for simplicity.

An embodiment of another storage medium provided in this specification is as follows: Corresponding to the another user identity-based payment method described above, based on a same technical concept, one or more embodiments of this specification further provide another storage medium.

The storage medium provided in this embodiment is configured to store computer-executable instructions. When the computer-executable instructions are executed by a processor, the following procedure is implemented: submitting, to a merchant system based on a payment channel selected by a user by using a merchant application, a payment request that carries an identity type corresponding to the payment channel; receiving a verification authorization page for the identity type that is returned by a payment platform, and submitting an authorization instruction to the payment platform to perform identity verification authorization; and obtaining and displaying a payment result of payment processing performed by the payment platform for the payment request, where the payment processing is performed based on a payment policy corresponding to the identity type in a merchant subscription configuration when user identity information obtained based on the identity verification authorization matches the identity type.

It should be noted that the embodiment of the another storage medium in this specification and the embodiment of the another user identity-based payment method in this specification are based on a same invention concept. Therefore, for specific implementation of this embodiment, refer to the implementation of the above-mentioned corresponding method, and repeated parts are omitted for simplicity.

Some specific embodiments of this specification are described above. Other embodiments fall within the scope of the appended claims. In some cases, the actions or steps described in the claims can be performed in a sequence different from that in the embodiments and desired results can still be achieved. In addition, the process depicted in the accompanying drawings does not necessarily need a particular sequence or consecutive sequence to achieve the desired results. In some implementations, multitasking and parallel processing are also feasible or may be advantageous.

In the 1930s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the programmable logic device is determined by a user through device programming. The designer performs programming to "integrate" a digital system to a PLD without requesting a chip manufacturer to design and produce an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). Currently, the Very-High-Speed Integrated Circuit Hardware Description Language (VHDL) and Verilog are most commonly used. A person skilled in the art should also understand that a hardware circuit that implements a logical method procedure can be readily obtained once the method procedure is logically programmed by using some described hardware description languages and is programmed into an integrated circuit.

A controller can be implemented by using any appropriate method. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or an embedded microprocessor. Examples of the controller include but are not limited to the following microprocessors: ARC 625D, Atmel AT91SAM, Microchip PIC18F26K20, and Silicone Labs C8051F320. A storage controller can also be implemented as a part of control logic of a storage. A person skilled in the art also knows that in addition to implementing the controller by using only the computer-readable program code, logic programming can be performed on method steps to enable the controller to implement a same function in a form of a logic gate, a switch, an application-specific integrated circuit, a programmable logic controller, an embedded microcontroller, etc. Therefore, the controller can be considered as a hardware component, and an apparatus included in the controller for implementing various functions can also be considered as a structure in the hardware component. Alternatively, the apparatus configured to implement various functions can even be considered as both a software module implementing the method and a structure in the hardware component.

The system, apparatus, module, or unit described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatuses are described by dividing the apparatus into various units based on functions. Certainly, when the embodiments of this specification are implemented, functions of the units can be implemented in one or more pieces of software and/or hardware.

A person skilled in the art should understand that one or more embodiments of this specification can be provided as a method, system, or computer program product. Therefore, one or more embodiments of this specification can use a form of hardware only embodiments, software only embodiments, or embodiments with a combination of software and hardware. In addition, a form of a computer program product that is implemented on one or more computer-usable storage media (including but not limited to a disk storage, a CD-ROM, an optical storage, etc.) that include computer-usable program code can be used in this specification.

This specification is described with reference to the flowcharts and/or block diagrams of the method, the device (system), and the computer program product according to the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

Alternatively, these computer program instructions can be stored in a computer-readable storage that can instruct a computer or another programmable data processing device to work in a specific way, so that the instructions stored in the computer-readable storage generate an artifact that includes an instruction apparatus. The instruction apparatus implements a specific function in one or more procedures in the flowcharts and/or in one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPUs), one or more input/output interfaces, one or more network interfaces, and one or more memories.

The memory can include a non-persistent memory, a random access memory (RAM), a nonvolatile memory, and/or another form in a computer-readable medium, for example, a read-only memory (ROM) or a flash memory (flash RAM). The memory is an example of the computer-readable medium.

The computer-readable medium includes persistent, non-persistent, removable and non-removable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD), or another optical storage, a cassette, a magnetic disk storage, or another magnetic storage device or any other non-transmission medium. The computer storage medium can be configured to store information that can be accessed by the computing device. As described in this specification, the computer-readable medium does not include computer-readable transitory media (transitory media) such as a modulated data signal and a carrier.

It should be further noted that the terms "include", "comprise", or any other variants thereof are intended to cover a non-exclusive inclusion, so that a process, a method, a product, or a device that includes a list of elements not only includes those elements but also includes other elements which are not expressly listed, or further includes elements inherent to such a process, method, product, or device. Without more constraints, an element preceded by "includes a ..." does not preclude the presence of additional identical elements in the process, method, product, or device that includes the element.

One or more embodiments of this specification can be described in the general context of computer-executable instructions executed by a computer, for example, a program module. Usually, the program module includes a routine, a program, an object, a component, a data structure, etc. for executing a specific task or implementing a specific abstract data type. The one or more embodiments of this specification can alternatively be practiced in a distributed computing environment. In the distributed computing environment, tasks are executed by remote processing devices that are connected through a communication network. In the distributed computing environments, the program module can be located in both local and remote computer storage media including storage devices.

The embodiments of this specification are described in a progressive manner. For same or similar parts in the embodiments, refer to each other. Each embodiment focuses on a difference from other embodiments. Particularly, the system embodiments are basically similar to the method embodiments, and therefore are briefly described. For a related part, refer to some descriptions in the method embodiments.

The above-mentioned descriptions are merely embodiments of this specification, and are not intended to limit this specification. A person skilled in the art can make various changes and variations to this specification. Any modification, equivalent replacement, improvement, etc. made without departing from the spirit and principle of this specification shall fall within the scope of the claims in this specification.

## Claims

1. A user identity-based payment method, comprising:
obtaining a payment request of a payment user that is sent by a merchant system, wherein the payment request carries an identity type corresponding to a payment channel for submitting the payment request;
detecting whether the payment user performs identity verification authorization for the identity type;
if yes, verifying whether user identity information obtained based on the identity verification authorization matches the identity type; and
if the user identity information matches the identity type, determining a payment policy corresponding to the identity type in a merchant subscription configuration, and performing payment processing for the payment request based on the payment policy.

2. The user identity-based payment method according to claim 1, wherein if an execution result of performing the step of detecting whether the payment user performs identity verification authorization for the identity type is no, the following operations are performed:
returning a verification authorization page for the identity type to a user terminal of the payment user, and receiving an authorization instruction submitted by the user terminal; and
making, based on the authorization instruction, a jump to the step of verifying whether user identity information obtained based on the identity verification authorization matches the identity type.

3. The user identity-based payment method according to claim 1, wherein determining the payment policy corresponding to the identity type in the merchant subscription configuration, and performing the payment processing for the payment request based on the payment policy comprises:
determining a payment interest corresponding to the identity type in the merchant subscription configuration; and
calculating an actual payment amount for the payment request based on the payment interest, returning the actual payment amount to a user terminal of the payment user, and performing payment processing for the payment request based on a payment confirmation instruction submitted by the user terminal.

4. The user identity-based payment method according to claim 1, wherein the payment channel comprises an online payment channel, and the payment request is submitted by the payment user to the merchant system through the online payment channel; and
the online payment channel comprises at least one of the following: a payment interface that corresponds to the identity type and that is configured in a merchant application, a payment interface that corresponds to the identity type and that is configured in a merchant subprogram, and a payment interface that corresponds to the identity type and that is configured on a merchant web page.

5. The user identity-based payment method according to claim 1, wherein the payment channel comprises an offline payment channel;
the offline payment channel comprises at least one of the following: a checkout interface that corresponds to the identity type and that is configured in a merchant checkout system and a collection unit that is adapted to the identity type and that is configured in a merchant terminal; and
correspondingly, the payment request is submitted after a payment code of the payment user is scanned by calling the checkout interface, or is submitted after a biometric feature of the payment user is collected through the collection unit and biometric feature recognition is performed.

6. The user identity-based payment method according to claim 5, wherein the identity verification authorization for the identity type is performed in a payment processing process for a historical payment request that carries the identity type and that is submitted by the payment user through an online payment channel.

7. The user identity-based payment method according to claim 1, wherein the identity verification authorization for the identity type is implemented in the following manner:
obtaining an authorization request, submitted by the payment user through an authorization subprogram, for performing identity verification for the identity type, and returning a verification authorization page to the authorization subprogram; and
performing authorization processing of the identity verification for the payment user based on identity information and an authorization instruction that are submitted by the authorization subprogram.

8. The user identity-based payment method according to claim 7, wherein after the step of performing authorization processing of the identity verification for the payment user based on identity authorization information submitted by the authorization subprogram is performed, the method further comprises:
if the authorization processing fails, generating an information supplement reminder of the identity verification, and returning the information supplement reminder to the authorization subprogram; and
performing authorization processing of the identity verification based on the identity information and supplementary identity information submitted by the authorization subprogram.

9. The user identity-based payment method according to claim 1, wherein if an execution result of performing the step of verifying whether user identity information obtained based on the identity verification authorization matches the identity type is no, the following operations are performed:
performing payment processing for the payment request based on a payment method corresponding to a non-specific identity type in the merchant subscription configuration;
or
generating an information supplement reminder of identity verification for the identity type, returning the information supplement reminder to a user terminal of the payment user, and obtaining supplementary identity information submitted by the user terminal; and
verifying whether the user identity information and the supplementary identity information match the identity type, and if yes, making a jump to the step of determining a payment policy corresponding to the identity type in a merchant subscription configuration, and performing payment processing for the payment request based on the payment policy.

10. The user identity-based payment method according to claim 1, wherein the user identity information is obtained in the following manner:
detecting whether the identity type is an intra-domain identity type; and
if yes, querying an identity certificate and/or an occupation certificate of the payment user in an intra-domain database based on the identity verification authorization.

11. The user identity-based payment method according to claim 1, wherein the user identity information is obtained in the following manner:
sending a query request for an authorization record that carries the identity verification authorization to a data platform corresponding to the identity type through an interface call; and
receiving identity information that is of the payment user in a case of the identity type and that is returned by the data platform.

12. The user identity-based payment method according to claim 1, wherein determining the payment policy corresponding to the identity type in the merchant subscription configuration, and performing the payment processing for the payment request based on the payment policy comprises:
determining, in a merchant subscription configuration corresponding to a payment type to which the payment request belongs, a payment interest that is adapted to the identity type; and
performing payment processing for the payment request based on the payment interest.

13. The user identity-based payment method according to claim 12, wherein after the substep of performing payment processing for the payment request based on the payment interest is performed, the method further comprises:
determining, based on a channel type of the payment channel, an additional interest corresponding to the channel type in the merchant subscription configuration; and
generating an interest issuance task for issuing the additional interest to the payment user through an offline channel, and/or granting service permission corresponding to the additional interest to the payment user.

14. A user identity-based payment method, comprising:
submitting, to a merchant system based on a payment channel selected by a user by using a merchant application, a payment request that carries an identity type corresponding to the payment channel;
receiving a verification authorization page for the identity type that is returned by a payment platform, and submitting an authorization instruction to the payment platform to perform identity verification authorization; and
obtaining and displaying a payment result of payment processing performed by the payment platform for the payment request, wherein the payment processing is performed based on a payment policy corresponding to the identity type in a merchant subscription configuration when user identity information obtained based on the identity verification authorization matches the identity type.

15. The user identity-based payment method according to claim 14, wherein after the step of receiving a verification authorization page for the identity type that is returned by a payment platform, and submitting an authorization instruction to the payment platform to perform identity verification authorization is performed, and before the step of obtaining and displaying a payment result of payment processing performed by the payment platform for the payment request is performed, the method further comprises:
receiving and displaying an actual payment amount returned by the payment platform, wherein the actual payment amount is calculated based on a payment interest corresponding to the identity type in the merchant subscription configuration; and
submitting a payment confirmation instruction entered by the payment user for the actual payment amount to the payment platform.

16. The user identity-based payment method according to claim 14, wherein the payment request is submitted by the payment user to the merchant system through an online payment channel; and
the payment channel comprises at least one of the following:
a payment interface that corresponds to the identity type and that is configured in a merchant application, a payment interface that corresponds to the identity type and that is configured in a merchant subprogram, and a payment interface that corresponds to the identity type and that is configured on a merchant web page.

17. The user identity-based payment method according to claim 14, wherein after the step of receiving a verification authorization page for the identity type that is returned by a payment platform, and submitting an authorization instruction to the payment platform to perform identity verification authorization is performed, the method further comprises:
receiving an information supplement reminder that is of identity verification for the identity type and that is returned by the payment platform; and
submitting supplementary identity information entered by the payment user for the information supplement reminder to the payment platform, to perform authorization processing of the identity verification.

18. A user identity-based payment apparatus, comprising:
a payment request obtaining module, configured to obtain a payment request of a payment user that is sent by a merchant system, wherein the payment request carries an identity type corresponding to a payment channel for submitting the payment request; and
an authorization detection module, configured to detect whether the payment user performs identity verification authorization for the identity type, wherein
if yes, an identity type verification module is run, and the identity type verification module is configured to verify whether user identity information obtained based on the identity verification authorization matches the identity type; and
if the user identity information matches the identity type, a payment processing module is run, and the payment processing module is configured to: determine a payment policy corresponding to the identity type in a merchant subscription configuration, and perform payment processing for the payment request based on the payment policy.

19. A user identity-based payment apparatus, comprising:
a payment request submission module, configured to submit, to a merchant system based on a payment channel selected by a user by using a merchant application, a payment request that carries an identity type corresponding to the payment channel;
an authorization page receiving module, configured to: receive a verification authorization page for the identity type that is returned by a payment platform, and submit an authorization instruction to the payment platform to perform identity verification authorization; and
a payment result obtaining module, configured to obtain and display a payment result of payment processing performed by the payment platform for the payment request, wherein the payment processing is performed based on a payment policy corresponding to the identity type in a merchant subscription configuration when user identity information obtained based on the identity verification authorization matches the identity type.

20. A user identity-based payment device, comprising:
a processor; and a storage, configured to store computer-executable instructions, wherein when the computer-executable instructions are executed, the processor is enabled to perform the following operations:
obtaining a payment request of a payment user that is sent by a merchant system, wherein the payment request carries an identity type corresponding to a payment channel for submitting the payment request;
detecting whether the payment user performs identity verification authorization for the identity type;
if yes, verifying whether user identity information obtained based on the identity verification authorization matches the identity type; and
if the user identity information matches the identity type, determining a payment policy corresponding to the identity type in a merchant subscription configuration, and performing payment processing for the payment request based on the payment policy.

21. A user identity-based payment device, comprising:
a processor; and a storage, configured to store computer-executable instructions, wherein when the computer-executable instructions are executed, the processor is enabled to perform the following operations:
submitting, to a merchant system based on a payment channel selected by a user by using a merchant application, a payment request that carries an identity type corresponding to the payment channel;
receiving a verification authorization page for the identity type that is returned by a payment platform, and submitting an authorization instruction to the payment platform to perform identity verification authorization; and
obtaining and displaying a payment result of payment processing performed by the payment platform for the payment request, wherein the payment processing is performed based on a payment policy corresponding to the identity type in a merchant subscription configuration when user identity information obtained based on the identity verification authorization matches the identity type.

22. A storage medium, configured to store computer-executable instructions, wherein when the computer-executable instructions are executed by a processor, the following procedure is implemented:
obtaining a payment request of a payment user that is sent by a merchant system, wherein the payment request carries an identity type corresponding to a payment channel for submitting the payment request;
detecting whether the payment user performs identity verification authorization for the identity type;
if yes, verifying whether user identity information obtained based on the identity verification authorization matches the identity type; and
if the user identity information matches the identity type, determining a payment policy corresponding to the identity type in a merchant subscription configuration, and performing payment processing for the payment request based on the payment policy.

23. A storage medium, configured to store computer-executable instructions, wherein when the computer-executable instructions are executed by a processor, the following procedure is implemented:
submitting, to a merchant system based on a payment channel selected by a user by using a merchant application, a payment request that carries an identity type corresponding to the payment channel;
receiving a verification authorization page for the identity type that is returned by a payment platform, and submitting an authorization instruction to the payment platform to perform identity verification authorization; and
obtaining and displaying a payment result of payment processing performed by the payment platform for the payment request, wherein the payment processing is performed based on a payment policy corresponding to the identity type in a merchant subscription configuration when user identity information obtained based on the identity verification authorization matches the identity type.
